# EUROPEAN PATENT APPLICATION

(11) **EP 1 122 938 A2**
(43) Date of publication of application: **08.08.2001**
(21) Application number: 01300524.4
(22) Date of filing: 22.01.2001
(51) Int. Cl.: H04M 3/533

(54) **Visitor voice mail**

(30) Priority: 02.02.2000 US 179643 P; 18.08.2000 US 641411
(71) Applicant: LUCENT TECHNOLOGIES INC., Murray Hill, New Jersey 07974-0636 (US)
(72) Inventor: Slusky, Ronald D., Highland Park, New Jersey 08904 (US)
(74) Representative: Buckley, Christopher Simon Thirsk

(57) **Abstract**

A visitor is enabled to provision from a borrowed telephone (104) a visitor's mailbox (116) associated with the borrowed telephone number, which may also be associated with a telephone owner's mailbox (114), this provisioning being allowed without requiring administrative mailbox provisioning privileges, such as ones possessed by a telephone system administrator. In one embodiment of the invention, the visitor dials a mailbox setup telephone extension and indicates that he wants to set up a visitor's mailbox (116). The voice mail system (110) provisions the visitor's mailbox (116) and prompts the visitor for setup information, which the visitor enters and hangs up. The voice mail system (110) then activates the visitor's mailbox (116). The telephone owner's (114) and visitor's (116) mailboxes operate concurrently. For example, while the visitor's mailbox (116) is active, a caller who wishes to leave a message may be directed to specify whether he desires to leave a message for the telephone owner or the visitor. Additionally, the message-waiting indicator is different for the two mailboxes. Once the visitor's mailbox (116) is deactivated, the system (110) returns to its prior operating state with respect to the telephone owner's mailbox (114), i.e. calls are no longer routed to the visitor's mailbox (116) and there is no longer a direction to chose between the two mailboxes. The visitor's mailbox (116) can be automatically deactivated either at a predetermined time or after a particular time period specified by the visitor. When the visitor's mailbox (116) is deactivated its contents can be forwarded to another mailbox, or force-delivered. Provisioning the visitor's mailbox (116) in this manner allows the visitor to receive messages while using a borrowed telephone (104) without having to access the telephone owner's mailbox (114), allowing the visitor and the telephone owner to retain the privacy and the security of their messages.

## Description

### Background of the Invention

This invention relates to messaging mailboxes.

It is often important for visitors to a facility, e.g. a company branch office, to have access to a telephone and to a voice mailbox at the facility they are visiting. This is a common scenario for business people who may have to borrow an office and a telephone when visiting a facility in which they are not permanently or regularly located. Allowing the visitor to get access to a local telephone provides convenience to both the visitor and to the callers trying to communicate with the visitor at the facility. This is true even if the visitor will be visiting the facility for a fairly brief length of time, such as several hours.

Once having arrived at the borrowed office, the visitor will typically give out the borrowed telephone number―the telephone number of the borrowed telephone―to people whom the visitor expects may call him while he is at the visited facility. When a caller calls the borrowed telephone number and the visitor does not answer the call, the caller hears the recorded greeting of the person who usually occupies the borrowed office. This person is referred to herein for convenience as the telephone owner (even though he typically does not own the telephone but is an employee of the company that owns the telephone). The caller could leave a message in the telephone owner's voice mailbox―a local voice mailbox that belongs to the telephone owner and is associated with the borrowed telephone's telephone number. However, in order for the visitor to be able to get access to the message, the visitor would have to know the telephone owner's voice mailbox password. Disadvantageously, giving the visitor the password to the telephone owner's voice mailbox eliminates the privacy and the security of messages for both the visitor and the telephone owner since both would be able to listen to all the messages in the voice mailbox regardless of whom the message is for. For example, the telephone owner might access his voice mailbox from a remote location while the visitor is still using the borrowed office.

As a consequence of such considerations, the visitor will typically not have the password to the telephone owner's voice mailbox, and when giving out the borrowed telephone number, he will typically tell people that messages should not be left for him in the telephone owner's voice mailbox. Thus, when a caller calls the borrowed telephone number and the visitor does not answer the call, the caller will need to, for example, 1) call another telephone number where he can leave messages for the visitor, 2) forgo leaving the visitor a message, or 3) page the visitor. All of these options are inconvenient for the caller and or the visitor.

### Summary of the Invention

The present invention solves the above problems by enabling a visitor, or any other user, to provision from a borrowed telephone a second, visitor's, mailbox associated with the borrowed telephone number. This provisioning is allowed without requiring the visitor to have administrative mailbox provisioning privileges, such as the mailbox provisioning privileges possessed by a telephone system administrator. The invention may be used to provision from any terminal a visitor's mailbox associated with that terminal. For example, the terminal can be computer, a mobile telephone, or, as just described, a telephone.

A system embodying the principles of the invention may include several advantageous features that can be used either alone or in combination to enhance the system's operation. One such feature is automatically deactivating the visitor's mailbox. For example, the visitor's mailbox can be deactivated either at/after a predetermined time period or at/after a particular time period specified by the visitor. Another such feature is forwarding the contents of the visitor's mailbox when it is deactivated either to another mailbox, e.g. a mailbox specified by the visitor when the visitor's mailbox is provisioned, or by forced delivery to a specified delivery telephone number. Still another feature is that the message-waiting indicator is different for the telephone owner's voice mailbox and the visitor's voice mailbox. One more such feature is for the telephone owner's and visitor's mailboxes to be active concurrently. For example, while the second mailbox is active, a caller who wishes to leave a message may be directed to specify whether it is desired to leave a message for the telephone owner or the visitor. Once the visitor's mailbox is deactivated, mailbox services associated with the telephone owner's mailbox, such as delivering greetings and directing message, return to their initial state, i.e. calls are no longer routed to the visitor's mailbox and there is no longer a direction to chose between the telephone owner's and visitor's mailboxes.

Provisioning the visitor's mailbox as just described advantageously allows the visitor to receive messages while using a borrowed telephone without having to access the telephone owner's mailbox. This allows both the visitor and the telephone owner to retain the privacy and the security of their messages.

Some of the steps taken by the visitor in provisioning the visitor's mailbox as described above will be generally similar to the mailbox provisioning steps carried out by either an overall system administrator or for example a consumer having administrative provisioning privileges over a feature-rich voice mailbox service that might be offered by a telephone service provider. Significantly, however, unlike the system administrator or the consumer, the visitor is enabled to provision a visitor's mailbox without having general administrative mailbox provisioning privileges. Importantly in this regard, on the other hand, the visitor, unlike an administrator, has no capability to access or change the contents of the telephone owner's mailbox. In may also be observed that, although the usually stringent security imposed by the voice mail system is significantly lessened, in a system embodying the invention as just described, this is counterbalanced by the fact that the visitor is able to change voice mail services associated with only the borrowed telephone and the visitor is able to do so only if he is able to gain physical access to the borrowed telephone.

### Brief Description of the Drawings

Figure 1 illustrates an office containing a visitor and a telephone that is connected to a telephone system that embodies the principles of the invention; and

Figure 2 is a flowchart of the operation of one embodiment of the present invention.

### Detailed Description

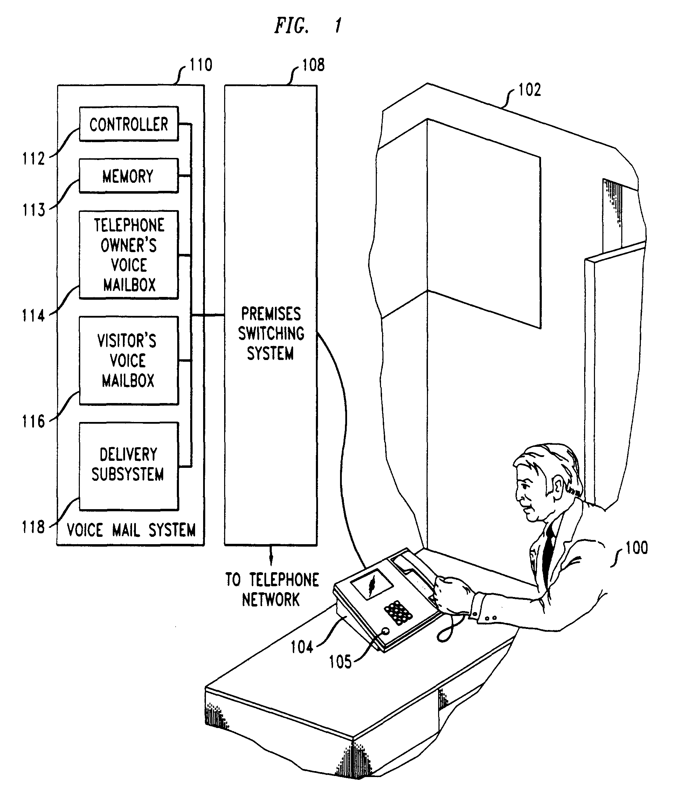

Figure 1 shows visitor 100 in borrowed office 102 in a facility in which the visitor is not permanently or regularly located. Borrowed office 102 can be either an empty office set up for use by visitors, or the office of an employee―the telephone owner―who usually occupies the office but is out, for example, on vacation. Borrowed office 102 includes a terminal that can receive communications, such as borrowed telephone 104. Borrowed telephone 104 is coupled to premises switching system 108 that can in turn be coupled to a public switched telephone network (PSTN). Premises switching system 108 is coupled to voice mail system 110 that includes controller 112, memory 113, and first voice mailbox 114, which is associated with the borrowed telephone number (the telephone number of borrowed telephone 104). Memory 113 can be any memory that can be used to store program instructions and data that can be used to operate the voice mail system. First voice mailbox 114 is referred to herein as telephone owner's voice mailbox 114. Voice mail system 100 provides mailbox services for the telephone owner's mailbox. These mailbox services include delivering a greeting, receiving and storing messages, and directing messages to the mailbox.

Telephone owner's voice mailbox 114 is typically already active when the visitor arrives in the borrowed office. Typically, voice mail system 110 is operable to allow telephone owner's voice mailbox 114 to be provisioned. For example, first mailbox 114 can be provisioned by the voice mail system administrator using an administrator routine that can be executed in controller 112. When the visitor arrives in the borrowed office, the mailbox services associated with the telephone owner's voice mailbox are in an initial state. For example, the aforementioned state includes the fact that the telephone owner's greeting is used when calls are directed to the voice mail system. The initial state also includes the possible presence of various already-heard, unheard, and/or saved messages in the telephone owner's mailbox.

Once visitor 100 has located an office that he can borrow, visitor 100 will typically give out the borrowed telephone number as a way to contact him while he is at the visited facility to allow callers to communicate with visitor 100 at the visited facility. Visitor 100 would also like to get access to a local voice mailbox a voice mailbox associated with the borrowed telephone number. This is true even if the visitor will be visiting the facility for a fairly brief length of time, such as several hours. The visitor would like to get access to a local voice mailbox without having to access telephone owner's voice mailbox 114.

In accordance with the present invention, visitor 100 is advantageously provided with the ability to provision a second local voice mailbox 116, i.e. visitor's voice mailbox 116, that is associated with the borrowed telephone number, thus allowing the visitor to get access to a local voice mailbox without having to access telephone owner's voice mailbox 114. Visitor 100 is able to provision visitor's voice mailbox 116 without requiring administrative mailbox provisioning privileges, such as the mailbox provisioning privileges possessed by a telephone system administrator. The administrative mailbox provisioning privileges include the ability to administer―including provision, de-provision, and change the operation of―form a signal administrative terminal multiple voice mailboxes each associated with one of a plurality of telephones or telephone numbers. (The administrative terminal can be any terminal, such as one of the plurality of telephones, a telephone that is not one of the plurality of telephones, or a computer.) Thus, the usually stringent security imposed by the voice mail system is significantly lessened. However, this is balanced by the fact that the visitor is able to change voice mail services associated with only the borrowed telephone and the visitor is able to do so only if he is able to gain physical access to the borrowed telephone. Importantly, the visitor, unlike an administrator, has no capability to access or change the contents of the telephone owner's voice mailbox.

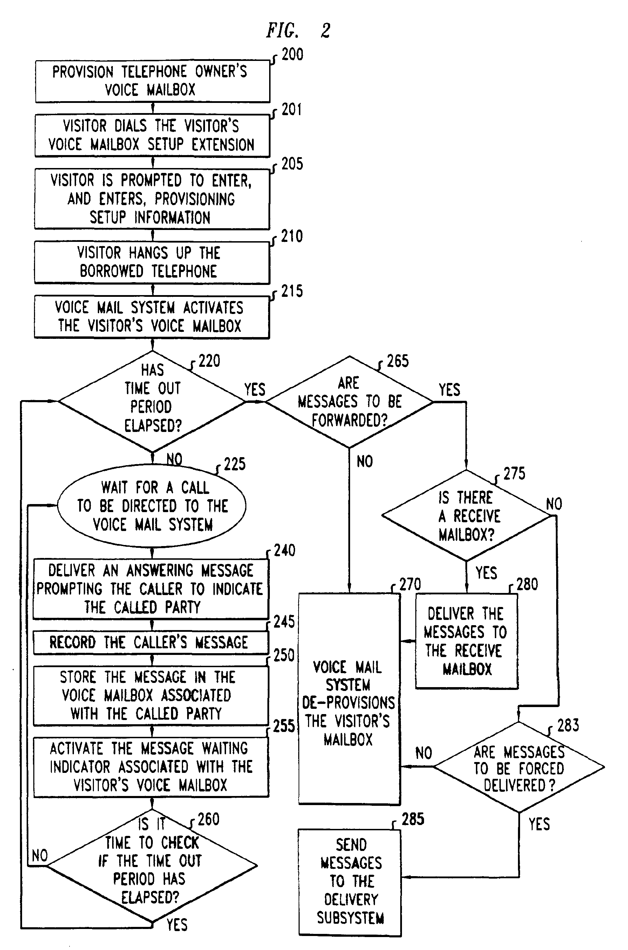

Figure 2 illustrates the flow of the process of operation of voice mail system 110. Although the individual boxes in the flowchart are described as process steps, those boxes can be equally understood as representing program instructions stored in memory 113 and executed by controller 112 to effectuate the respective process steps.

As indicated at step 200, the telephone owner's voice mailbox will have been provisioned at some time in the past. When visitor 100 thereafter arrives in borrowed office 102 and decides to set up a local voice mailbox, the visitor uses borrowed telephone 104 to access and execute a mailbox setup routine within voice mail system 110 (as indicated in step 201). Visitor 100 can do this by, for example, dialing a mailbox setup telephone extension (e.g. 3333). Then, in response to a prompt provided by the system, the visitor indicates that he wants to set up a voice mailbox, i.e. the visitor requests from the borrowed telephone the initialization of the provisioning of the visitor's mailbox. (Note, in some embodiments, the visitor can indicate that he wants to initialize the visitor's mailbox simply by accessing and executing the visitor's mailbox setup routine.) The voice mail system will now begin to provision a second, visitor's, voice mailbox.

In step 205, the visitor is prompted to enter, and enters, provisioning setup information. The setup information can be any information that is useful in the operation of the visitor's voice mailbox, and it can be prompted for in any order. For example, the visitor can first be prompted to speak his name, and then prompted to record an optional personal greeting. The visitor can also be prompted to select a password. Selecting a password allows the visitor to get access to the voice mailbox at/after it has been provisioned and activated. For example, the visitor could listen to the messages in the voice mailbox, either from the borrowed telephone or remotely, by calling in to the voice mail system and entering the borrowed telephone number and the password.

During the provisioning of the visitor's mailbox, the visitor can also be prompted for additional set up information. Illustratively, the visitor can be prompted to indicate whether the visitor's voice mailbox should time out―be automatically de-provisioned after a particular time period―or whether a de-provisioning is to be effectuated through an affirmative request. If the visitor's voice mailbox is to time out, the visitor is asked for the time out period, which is the time period in days after which the visitor's voice mailbox should be de-provisioned. The visitor is then asked if after the visitor's mailbox has been de-provisioned, any unheard and/or saved messages should be forwarded to a receiving mailbox in, for example, voice mail system 110 itself or in another messaging system networked with voice mail system 110. The visitor can also be prompted for a delivery telephone number to which the unheard and/or saved messages can be force-delivered, meaning that the voice mail system would place a call to the delivery telephone number and play the messages when the call is answered either by a person or by a voice mail system associated with the delivery telephone number. The visitor may also be prompted for the delivery date, which is the date he would like the forced-delivery attempts to begin. The messages can be force-delivered either in addition to or instead of transferring them to a receiving mailbox.

If the visitor does not enter a particular piece of setup information, a system default is used for that information. The system defaults can be any setting that would allow for the operation of the visitor's voice mailbox. For example, if the visitor does not enter a time out period, the default time out period can be one day.

After the visitor enters the setup information, the visitor hangs up the borrowed telephone (step 210), and thereupon the voice mail system activates visitor's voice mailbox 116 (step 215). The voice mail system also changes the state of the mailbox services form the initial state to a second state, where the greetings and the directions of messages reflects the fact that there are two mailboxes associated with the borrowed telephone, as described in more detain with reference to steps 240, 245, and 250.

Once visitor's voice mailbox 116 has been provisioned, it is periodically checked to see if the time out period has elapsed (step 220). Visitor's voice mailbox 116 can be checked either regularly or at the occurrence of a particular event to see if the time out period has elapsed. For example, visitor's voice mailbox can be checked once a day at midnight to determine if the number of days in the time out period has elapsed and the visitor's voice mailbox 116 should be de-provisioned.

If the time out period has not elapsed (the answer in step 220 is NO) the process proceeds to step 225 where it waits for a call to be directed to voice mail system 110. A call would be directed to the voice mail system if a call is received and is not answered at borrowed telephone 104. (If the call is answered at borrowed telephone 104, both the voice mail system and the communication system―which can include the voice mail system, and/or the premises switching system, and possibly even the borrowed telephone―operate as they would normally when there is a call that is answered at the borrowed telephone.)

If the answer in step 225 is YES and a call has been directed to the voice mail system, an answering message is delivered that prompts the caller to indicate for whom voice mail is to be recorded, i.e. who is the called party (step 240). For example, the answering message can be: "You have reached 555-5555 (the borrowed telephone number), please enter '1' to leave a message for Joe Smith (telephone owner's name) or '2' for (visitor's name)." If the visitor did not enter his name as part of the setup information for visitor's voice mailbox 116, then the answering message can be: "You have reached 555-5555, please enter '1' for Joe Smith or '2' for the visitor using 555-5555." The caller indicates the called party, and the voice mail system uses the indication to determine to which of the mailboxes the about to be received message is to be directed.

After the caller indicates the called party, the greeting of the voice mailbox associated with the indicated called party is delivered, e.g. "You've reached the voice mailbox of (visitor's name) I will be at this telephone number until August 20 please leave a message and I will return your call as soon as possible." The caller's message is then recorded (step 245) and stored in the voice mailbox associated with the specified called party (step 250).

The message-waiting indicator, e.g. light-emitting diode (LED) 105, associated with borrowed telephone 104 is now activated (step 255). The message-waiting indicator, illustratively, has (e.g. it can be placed in) different indication states for the telephone owner's voice mailbox and the visitor's voice mailbox. For example, the message-waiting indicator may: stay continuously lit when there are messages only in the telephone owner's voice mailbox; stay on, i.e. lit, for 2 seconds and off, i.e. unlit, for 2 seconds when there are messages in only the visitor's voice mailbox; and stay on for 3 seconds, and off for 1 second when there are messages in both mailboxes. In step 260, it is determined if it is time to check if the time out period has elapsed. If the answer is NO, the process returns to step 225 to wait for a call to be directed to the voice mail system; and if the answer is YES, the process returns to step 220 to determine if the time out period has elapsed.

It will be recalled that the sequence of steps just described is carried out when the determination of whether the time out period has elapsed, at step 220, resulted in an answer of NO. If on the other hand this determination resulted in an answer of YES, this is an indication that the visitor's voice mailbox is to be deactivated. (Another such indication could be the visitor's indication that the visitor's voice mailbox is to be affirmatively terminated, as option discussed below.) The process then proceeds to step 265 to determine whether messages are to be forwarded. To determine whether messages are to be forwarded, it is 1) determined if there are unheard and/or saved messages, and 2) whether the visitor specified a receive mailbox and/or delivery telephone number. If messages are not to be forwarded (the answer in step 265 is NO), the visitor's voice mailbox 116 is de-provisioned (step 270), and voice mail system 110 frees up the memory that was reserved for visitor's voice mailbox 116 for other uses. When visitor's voice mailbox 116 is deactivated the voice mail system returns the mailbox services form the second state back to the initial state, so when a call is thereafter routed to the voice mail system the answering message that prompts the caller to indicate the called party is no longer delivered.

If messages are to be forwarded (the answer is step 265 is YES), then in step 275 it is determined if the visitor provided the telephone number (or extension) associated with the receive mailbox. If he did, the messages are delivered to the receive mailbox (step 280), and the process proceeds to step 270 to de-provision visitor's mailbox 116. If no receive mailbox was specified, then, in step 283, it is determined if unheard and/or saved messages are to be force-delivered. If the messages are to be force-delivered the messages are forwarded to delivery subsystem 118 of voice mail system 110 (step 285) and the process proceeds to step 270 to de-provision the visitor's voice mailbox; otherwise the process just proceeds to step 270 to de-provision the visitor's voice mailbox.

Delivery subsystem 118 operates to force-deliver those messages to the delivery telephone number provided by the visitor. One illustrative embodiment of the operation of delivery subsystem 118 is now described. Delivery subsystem 118 receives the messages to be force delivered, and checks if the delivery date and time―the date and time the visitor wanted the force-delivery to―start has arrived. If the current date and time are earlier than the delivery date, then the delivery subsystem waits for the delivery date; otherwise delivery subsystem 118 attempts to force-deliver the messages by initiating a call to the delivery telephone number. If the call is answered (either by a person or the voice mail system associated with the delivery telephone number), delivery subsystem 118 plays the messages, thereby delivering them. Delivery subsystem 118 periodically attempts to force-deliver the messages until either the messages are delivered or the delivery subsystem has been unsuccessful in force-delivering the messages for a predetermined time. For example, delivery subsystem 118 can attempt to force-deliver the messages every hour for three days, after which time if the messages are still not delivered they are erased.

Although, in the illustrative embodiments of the invention the visitor provisions and activates the visitor's voice mailbox, this task can be performed by anyone who has access to the borrowed telephone, including an assistant who can set up the visitor's voice mailbox for the visitor, or even the telephone owner, who can set up the second voice mailbox for his own use. Allowing anyone with access to the borrowed telephone to provision a voice mailbox relaxes the usually stringent security imposed by the voice mail system. However, this is balanced by the fact that the visitor is able to change voice mail services associated with only the borrowed telephone and the visitor is able to do so only if he is able to gain physical access to the borrowed telephone. Importantly, the visitor, unlike an administrator, has no capability to access or change the contents of the telephone owner's mailbox. The foregoing is merely illustrative. Thus, for example, in the illustrative embodiments the messaging system is a voice messaging system, the mailbox is a voice mailbox, and the terminal is a telephone. In alternative embodiments of the invention, the messaging system can be any type of messaging system, used with any terminal and any terminal ID, such as a telephone number or mobile telephone number. Similarly, the mailbox is one that is able to store the messages of the messaging system. For example, the messaging system can be a multimedia messaging system, a video messaging system, or a text messaging system; and the terminal can be a computer, a video screen, a mobile telephone, or any other type of terminal. Additionally, even when the messaging system is a voice messaging system, the receiving mailbox can be either a voice mailbox or any type of mailbox capable of receiving voice messages, such as a multimedia mailbox. Furthermore, if the communication system is capable of translating the messages into another format, such as text, the receiving mailbox can be any type of mailbox that can receive either voice messages or messages of the other format.

Furthermore, the illustrative embodiments are described with one telephone owner's voice mailbox and one visitor's voice mailbox. In alternative embodiments of the invention, there can be any number of both telephone owner's and visitor's voice mailboxes. In this case, if there are two active mailboxes associated with the borrowed telephone number, when the visitor (or the owner) calls into the mailbox setup telephone extension, he is asked whether he wants to provision another visitor's voice mailbox, to alter an existing mailbox, or to deactivate and/or de-provision an existing mailbox. If the visitor (or the owner) chooses to deactivate the visitor's voice mailbox and there are still at least two active voice mailboxes associated with the borrowed telephone number, then the answering message is modified to remove the de-provisioned visitor's voice mailbox, leaving the caller the option between the telephone owner's voice mailbox(es) and the other still active voice mailboxes.

Additionally, the illustrative embodiments are described with the visitor's mailbox being de-provisioned after a particular time out period. In alternative embodiments of the invention the visitor's mailbox can be affirmatively terminated. In this case, the visitor or the telephone owner would access and execute the mailbox setup routine of the voice mail system, for example, by dialing the mailbox setup telephone extension, and indicating that he wants to de-provision the voice mailbox.

Moreover, although in the illustrative embodiments the caller chooses between the telephone owner's and visitor's mailboxes by pressing a button on the borrowed telephone, in alternative embodiments, the selection can be done in other ways. For example, the selection can be voice activated. Similarly, the setup information can be entered by the visitor in any manner, including speaking the information into the terminal, or by entering the information on the keypad of the terminal. The set up information can also be entered or changed on another terminal that is associated with the borrowed telephone. For example, the set up information can be entered on a computer that is located in the same room and networked with the borrowed telephone. However, security consideration have to be considered when the visitor can enter or change the set up information on a terminal other than the terminal on which he provisioned the voice mailbox. Illustratively, the visitor may set up a password when he is provisioning the account, and then may need to enter that password to enter set up information, to remotely listen the messages in the voice mailbox, or to de-provision the voice mailbox.

Additionally, in the illustrative embodiments of the invention no special access is required to access the borrowed telephone. In alternative embodiments of the invention, a security code may be required to access the borrowed telephone; however, the visitor will still be able to provision a visitor's mailbox from the borrowed telephone without requiring administrative mailbox provisioning privileges. For example, before the borrowed telephone allows the visitor to connect to any telephone number or telephone extension, including the mailbox setup telephone extension, the visitor may need to enter a security code. The security code can be the visitor's human resources identification (HRID) or the client number to which calls are to be billed. Once the visitor enters the security code, the visitor can dial into the mailbox setup telephone extension and provision and activate a visitor's voice mailbox without possessing and/or providing any further security codes.

Furthermore, although the illustrative embodiment contemplates using a particular hardware configuration, one skilled in the art will realize that other hardware configurations can be used to implement the invention. For example, although the voice mail system is shown as coupled to the premises switching system the voice mail system can be part of the premises switching system, or the voice mail system can share functional elements, such as the controller, with the premises switching system. Additionally, although voice mailboxes are shown as being physically co-located with other elements of the voice mail system, the voice mailboxes can be located anywhere in the communication system, such as in the borrowed telephone or in a remote server.

Moreover, in the illustrative embodiments, the mailbox is provisioned and activated when the visitor hangs up the telephone whether or not he provided the setup information. In alternative embodiments of the invention, the mailbox can be provisioned and activated when the visitor indicates that he want to set one up, instead of when he hangs up. In other alternative embodiments of the invention the user may be required to enter some, or all, of the setup information for the mailbox to be provisioned and activated.

Additionally, in the illustrative embodiments both the telephone owner's and the visitor's mailboxes are concurrently active and when a call is routed to the voice mail system the caller is prompted to specify whether he wishes to leave a message for the telephone owner or the visitor. In alternative embodiments of the invention when the visitor's mailbox is activated the telephone owner's mailbox is temporarily deactivated. Thus, when a call is routed to the voice mail system, the call is routed to the visitor's voice mailbox and no opportunity is provided to route calls to the telephone owner's mailbox. When the visitor's voice mailbox is deactivated (step 270), the voice mail system returns to its prior operating state with respect to the telephone owner's mailbox, so when a call is thereafter routed to the voice mail system it is routed to the telephone owner's voice mailbox. The provisioning, operation, and de-provisioning of the visitor's voice mailbox does not change the contents of the telephone owner's mailbox.

Furthermore, although in the illustrative embodiment the message-waiting indicator for both mailboxes is the same LED, in alternative embodiments of the invention there can be multiple message-waiting indicators each serving either one or several voice mailboxes.

Thus, while the invention has been described with reference to a preferred embodiment, it will be understood by those skilled in the art having reference to the specification and drawings that various modifications and alternatives are possible therein without departing significantly from the spirit and scope of the invention.

## Claims

1. A method for use in a communication system that includes a first mailbox (114) associated with a terminal (104), the method CHARACTERIZED BY the step of provisioning a second mailbox (116) associated with the terminal (104), the provisioning step being initiated in response to a request from the terminal (104) to initiate the provisioning step and without requiring administrative mailbox provisioning privileges.

2. The method of claim 1, CHARACTERIZED IN THAT the provisioning step is performed without de-provisioning the first mailbox (114).

3. The method of claim 2, CHARACTERIZED IN THAT the communication system further includes a plurality of terminals, and the administrative mailbox provisioning privileges include the ability to execute from a single administrative terminal at least one of: provisioning, de-provisioning, or changing the operation of multiple voice mailboxes each associated with a respective terminal of the plurality.

4. The method of claim 3, CHARACTERIZED IN THAT:
the communication system further includes a mailbox setup routine;
the provisioning step further comprises the steps of executing the mailbox setup routine, and receiving at least some set up information; and
the method further comprises the step of de-provisioning the second mailbox (116).

5. The method of claims 2 or 4, CHARACTERIZED IN THAT the de-provisioning step comprises de-provisioning the second mailbox (116) at a predetermined time.

6. The method of claims 2 or 4, further CHARACTERIZED BY the step of forwarding messages in the second mailbox (116) to a receiving mailbox responsive to an indication that the second mailbox 116) is to be deactivated.

7. The method of claims 2 or 4, further CHARACTERIZED BY the step of force-delivering messages in the second mailbox (116) responsive to an indication that the second mailbox (116) is to be deactivated.

8. The method of claims 2 or 4, CHARACTERIZED IN THAT the communication system includes a message-waiting indicator (105) associated with the terminal (104), and the method further comprises the steps of:
placing the message-waiting indicator (105) into a first indication state if there are messages in the first mailbox; and
placing the message-waiting indicator (105) into a second indication state if there are messages in the second mailbox.

9. The method of claims 2 or 4, CHARACTERIZED IN THAT the first (114) and second (116) mailboxes are active concurrently.

10. The method of claims 2 or 4, further CHARACTERIZED BY the steps of:
prompting for an indication so as to determine to which of the mailboxes to direct a message about to be received; and
directing the message to one of the mailboxes based on the indication.

11. The method of claims 2 or 4, CHARACTERIZED IN THAT the communication system provides mailbox services having an initial state, and the method further comprising the steps of:
placing the mailbox services into second state in response to the provisioning step; and
returning the mailbox services from the second state to the initial state in response to a deactivation of the second mailbox (116).

12. A messaging system (110) CHARACTERIZED BY:
a means for provisioning a first mailbox (114) associated with a terminal (104);
a means for provisioning a second mailbox (116) associated with the terminal (104), the means being operable to provision the second mailbox (116) in response to a request from the terminal (104) to initiate the provisioning step and without requiring administrative mailbox provisioning privileges.

13. The messaging system (110) of claim 12, CHARACTERIZED IN THAT the communication system further includes a plurality of terminals, and the administrative mailbox provisioning privileges include the ability to execute from a single administrative terminal at least one of: provisioning, de-provisioning, or changing the operation of multiple voice mailboxes each associated with a respective terminal of the plurality.

14. The messaging system (110) of claim 12, further CHARACTERIZED BY means for de-provisioning the second mailbox (116) at a predetermined time.

15. The messaging system (110) of claim 12, further CHARACTERIZED BY means for forwarding messages in the second mailbox (116) to a receiving mailbox responsive to an indication that the second mailbox (116) is to be deactivated.

16. The messaging system (110) of claim 12, further CHARACTERIZED BY means for force-delivering messages in the second mailbox (116) responsive to an indication that the second mailbox (116)is to be deactivated.

17. The messaging system (110) of claim 12, CHARACTERIZED IN THAT the first (114) and second (116) mailboxes are active concurrently.

18. The messaging system (110) of claim 12, further CHARACTERIZED BY a message-waiting indicator having a first indication state if there are messages in the first mailbox (114) and a second indication state if there are messages in the second mailbox (116).
